# FASCICULE DE BREVET EUROPEEN

(11) **EP 1 213 208 B1**
(45) Date de publication et mention de la délivrance du brevet: **06.10.2004**
(21) Numéro de dépôt: 01403157.9
(22) Date de dépôt: 06.12.2001
(51) Int. Cl.: B62D 29/04, B60Q 1/26

(54) **Combinaison d'une pièce de carrosserie de véhicule automobile et d'un dispositif optique**
Kraftfahrzeugkarrosseriebauteil kombiniert mit einer optischen Einheit
Vehicle body part combined with a lighting device

(30) Priorité: 07.12.2000 FR 0015932
(43) Date de publication de la demande: 12.06.2002
(73) Titulaire: COMPAGNIE PLASTIC OMNIUM, 69007 Lyon (FR)
(72) Inventeur: Cheron, Hugues, 01800 Bourg Saint Christophe (FR); Fayt, Arnold, 39240 Aromas (FR); Rochon, Cyrille, 01100 Oyonnax (FR)
(74) Mandataire: Remy, Vincent Noel Paul

(56) Documents cités:
- DE-A- 19 811 420
- DE-A- 19 951 785
- DE-C- 19 840 636
- DE-U- 29 719 104
- GB-A- 1 168 352
- GB-A- 2 098 552
- GB-A- 2 311 966

## Description

La présente invention concerne une pièce de carrosserie de véhicule automobile munie d'un dispositif optique.

Les dispositifs optiques de véhicules automobiles sont connus pour être relativement onéreux, compte tenu de leur structure complexe.

En outre, leur installation sur véhicule est également coûteuse, car elle requiert la présence de moyens de fixation spécifiques, tels qu'une tôle porte optique en doublure d'aile, ainsi qu'une main d'oeuvre qualifiée pour le montage proprement dit.

On a déjà tenté d'obtenir une réduction de ces coûts en logeant certains dispositifs optiques directement dans des pièces de carrosserie.

Mais l'application de cette solution s'est limitée à quelques exemples isolés du fait que les dispositifs optiques ainsi montés sur véhicules étaient rendus très vulnérables.

C'est la raison pour laquelle on n'a jamais proposé de loger les dispositifs optiques directement dans des pièces de carrosserie formant la ceinture de caisse du véhicule mais seulement de les intégrer dans le toit du véhicule, comme dans la publication allemande n° DE 31 12 686 ou dans des bas de caisse, ainsi que cela se pratique pour des feux antibrouillard.

Les inventeurs à la base de la présente invention ont mis en évidence que l'une des principales difficultés du montage direct des dispositifs optiques sur les pièces de carrosserie n'est pas seulement qu'ils sont exposés à d'éventuels chocs, mais que les pièces de carrosserie qui les supportent subissent un certain nombre de contraintes qui les amènent à se déformer dans des proportions généralement non tolérables par les dispositifs optiques.

Ce phénomène est d'autant plus accentué pour des pièces de carrosserie réalisées en matériaux synthétiques.

Partant de ce constat, les inventeurs de la présente invention ont déterminé un remède à cette inaptitude des dispositifs optiques à suivre les déformations des pièces de carrosserie qui les supportent.

Ainsi, l'invention objet de la présente demande concerne une pièce de carrosserie supportant un dispositif optique d'un véhicule automobile, la pièce de carrosserie étant destinée à enrober une partie de la ceinture de caisse du véhicule et comportant une peau externe formée par une paroi en matière plastique, le dispositif optique ayant pour éléments constitutifs un boîtier apte à contenir au moins une source lumineuse et un vitrage permettant la diffusion de lumière émise par ladite source lumineuse, la pièce de carrosserie étant caractérisée en ce que la peau externe de la pièce de carrosserie comporte un aménagement formant au moins une partie de l'un au moins des éléments constitutifs du dispositif optique.

En d'autres termes, l'idée simple - mais non évidente a priori - exploitée par l'invention est de réduire le plus possible le volume occupé par les parties rigides du dispositif optique afin que des déformations de la pièce de carrosserie environnant ledit dispositif optique puissent se produire sans que les parties rigides du dispositif optique ne soient atteintes.

Ainsi, dans un premier mode de réalisation de l'invention, l'élément constitutif du dispositif optique formé par la peau externe de la pièce de carrosserie est son boîtier, de sorte que la partie rigide du dispositif optique se limite à la source lumineuse et au vitrage.

La pièce de carrosserie peut donc se déformer autour de la source lumineuse et du vitrage avec un jeu suffisant pour que ces déformations n'entraînent aucune dégradation de la source lumineuse ou du vitrage.

Le boîtier peut être partiellement réalisé par la peau externe de la pièce de carrosserie, par exemple s'il se compose d'un support de sources lumineuses et d'un cuvelage pour ces sources lumineuses et que seul le support ou seul le cuvelage est formé par un aménagement de la peau externe.

Dans un mode de réalisation particulier, le vitrage est rapporté sur le boîtier et fixé sur celui-ci, par exemple par encliquetage, un joint assurant l'étanchéité entre ledit vitrage et ledit boîtier.

Dans une variante particulière, le vitrage comporte une jupe annulaire, tandis que le boîtier comporte une gorge périphérique dont le fond est garni par le joint et dans laquelle vient se loger la jupe annulaire du vitrage.

Le boîtier étant ainsi rendu étanche, il peut avantageusement comporter un évent assurant la ventilation de son volume intérieur.

Dans un mode de réalisation particulier, adapté au cas où le boîtier est étanche, la source lumineuse est un ensemble de diodes électroluminescentes.

Dans un autre mode de réalisation de l'invention, le vitrage est lui-même formé par la peau externe de la pièce de carrosserie.

En d'autres termes, l'élément constitutif du dispositif optique formé par la peau externe est le vitrage.

A cet effet, on peut utiliser une matière plastique transparente colorée ou translucide et souple, telle qu'un polyoléfine, du polychlorure de vinyle, du polyacétate de vinyle, un styrénique, un polyacrylique, un polyester saturé, un polyamide, un polycarbonate, un élastomère thermoplastique, un polymère à catalyse métallocène, laquelle matière peut être co-moulée ou surmoulée dans la pièce de carrosserie ou collée ou soudée sur celle-ci.

Dans ce cas, le cuvelage peut être intégré à, ou supporté par, la structure, ou encore être rapporté à l'intérieur de la pièce de carrosserie.

Afin de faciliter la compréhension de l'invention, différents modes de réalisation de celle-ci vont maintenant être décrits, à titre d'exemples n'apportant aucune limitation à la portée de l'invention, à partir des planches de dessins annexées sur lesquelles:
- la figure 1 est une vue en perspective éclatée de trois quarts arrière d'un véhicule muni d'un pare-chocs selon un premier mode de réalisation de l'invention,
- la figure 2 est une vue en coupe selon II-II de la figure 1 après réunion des pièces de l'éclaté,
- la figure 3 est une vue en coupe analogue à celle de la figure 2 montrant une variante de réalisation de la plaque porte-ampoules,
- les figures 4 et 5 sont respectivement analogues aux figures 2 et 3 et montrent le comportement de l'optique en cas de déformation du pare-chocs,
- la figure 6 est une vue analogue à la figure 1 d'un véhicule muni d'un pare-chocs selon un deuxième mode de réalisation de l'invention,
- la figure 7 est une vue en perspective éclatée de trois quarts arrière d'un autre véhicule muni d'un pare-chocs selon un troisième mode de réalisation de l'invention,
- la figure 8 est une vue en perspective éclatée de l'angle arrière droit d'un autre véhicule muni d'un coin de pare-chocs selon un quatrième mode de réalisation de l'invention,
- la figure 9 est une vue en perspective éclatée de l'angle arrière droit d'un autre véhicule muni d'un coin de pare-chocs selon un cinquième mode de réalisation de l'invention,
- la figure 10 est une vue en perspective éclatée d'un coin de pare-chocs selon un sixième mode de réalisation de l'invention,
- la figure 11 est une vue en coupe selon XI-XI de la figure 10, après réunion des pièces de l'éclaté,
- la figure 12 est une vue de trois-quarts arrière d'un véhicule comportant une coin de pare-chocs selon un septième mode de réalisation.

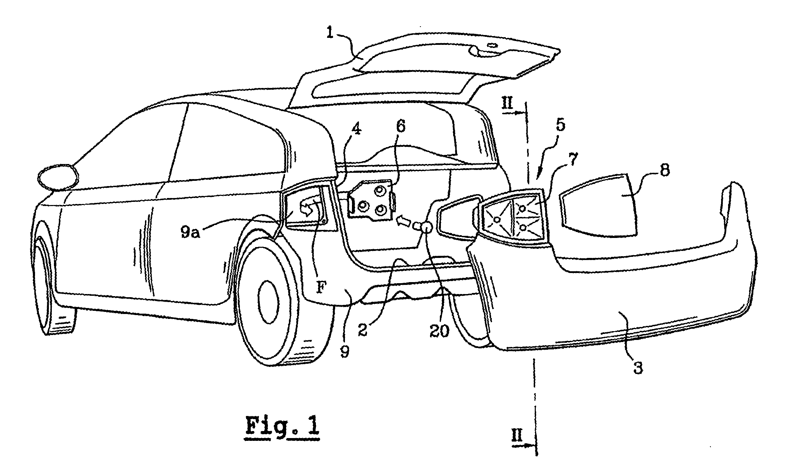

Le véhicule représenté à la figure 1 comporte un hayon arrière 1 qui est représenté ouvert.

Ce hayon 1 est délimité inférieurement par un seuil 2 qui est bordé par un pare-chocs 3 constitué par sa seule peau externe, laquelle recouvre toute la partie inférieure du seuil 2 et remonte sur ses bords latéraux 4 où sont disposées des optiques 5.

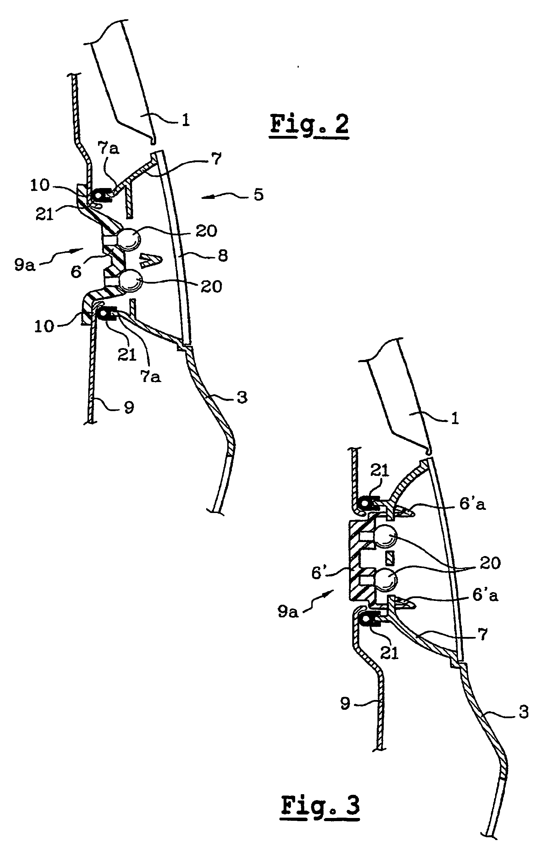

Comme on le voit notamment à la figure 2, chaque optique 5 est constituée par une plaque 6 porte-ampoules recevant trois ampoules 20, un cuvelage réfléchissant 7 qui comporte une jupe 7a le prolongeant vers l'intérieur du pare-chocs, de sorte que ledit cuvelage sert simultanément de boîtier d'optique, et un vitrage coloré 8 recouvrant le cuvelage et fermant le boîtier de l'optique.

Le cuvelage 7 et sa jupe 7a sont réalisés d'un seul tenant avec le pare-chocs 3. Ils sont issus de moulage avec ce dernier.

Dans une variante avantageuse, la surface réfléchissante du cuvelage 7 peut-être obtenue par surmoulage d'un film chromé ou métallisé dans la région du pare-chocs constituant ledit cuvelage.

La plaque porte-ampoules 6 se monte sur la structure 9 par l'intérieur du véhicule, comme l'indique la flèche F sur la figure 1, et se fixe sur ladite structure par tout moyen conventionnel approprié 10, en face d'une ouverture 9a prévue à cet effet sur ladite structure.

Le cuvelage 7 prend place devant la plaque porte-ampoules 6 et les ampoules 20 lors du montage du pare-chocs 3 sur le véhicule.

Comme le montre la figure 2, un joint d'étanchéité 21 intercalé entre la jupe 7a du cuvelage formant boîtier et la structure 9 assure l'étanchéité de l'optique vis à vis de l'extérieur. En outre, du fait qu'il entoure l'ouverture 9a, le joint 21 réalise également l'étanchéité de cette l'ouverture 9a, qui donne sur l'intérieur du véhicule, vis à vis de l'extérieur.

Dans la variante de la figure 3, la plaque porte-ampoules 6' n'est pas fixée sur la structure 9 mais sur le cuvelage 7, grâce à des pattes d'encliquetage 6'a.

On fixe donc d'abord la plaque porte-ampoules 6', munie des ampoules 20, sur le cuvelage 7 du pare-chocs 3, puis on monte le pare-chocs sur le véhicule, ce qui positionne la plaque porte-ampoules 6' et le cuvelage 7 en face de l'ouverture 9a ménagée dans la structure 9.

Le joint 21 conserve les mêmes fonctions d'étanchéité de l'optique vis-à-vis de l'extérieur et de l'ouverture 9a vis-à-vis de l'extérieur.

Dans les deux variantes précédemment décrites, le vitrage coloré 8 s'applique pardessus le cuvelage 7, avec éventuellement interposition d'un joint d'étanchéité (non représenté). La fixation du vitrage est de préférence continue sur toute sa périphérie, afin qu'aucune concentration d'efforts ne se produise en des points particuliers de cette fixation.

Le matériau utilisé pour réaliser le pare-chocs et le cuvelage de l'optique présente une souplesse suffisante pour supporter des déformations élastiques, ce qui permet de préserver l'optique en cas de contact du pare-chocs avec un obstacle.

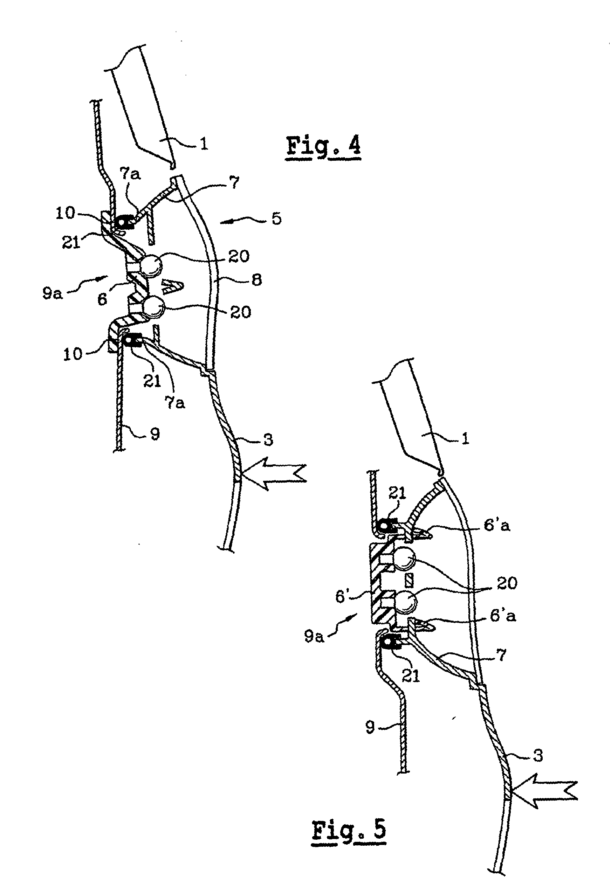

Comme on le voit sur les figures 4 et 5, lorsque le pare-chocs se déforme, du fait par exemple d'un appui contre un autre pare-chocs ou un obstacle fixe de la chaussée, le cuvelage, partie intégrante du pare-chocs, se déforme sans difficulté autour des ampoules 20. Le vitrage fait de même, et ce d'autant plus facilement qu'il est fixé de manière continue à sa périphérie au pare-chocs.

L'optique dans son ensemble est ainsi préservée, la seule limite étant que le cuvelage ou le vitrage, une fois déformé, arrive au contact d'une ampoule et la brise, ce qui peut être considéré de toute façon comme un dégât mineur et facilement réparable.

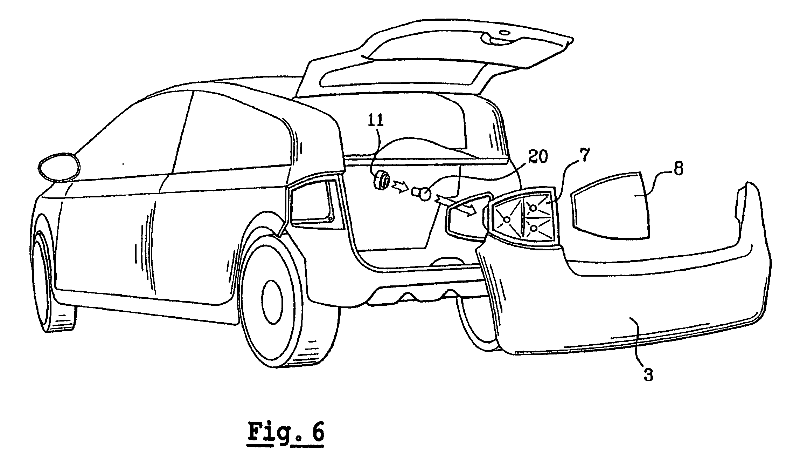

Dans l'exemple de la figure 6, le pare-chocs 3 comportant le cuvelage 7 est sensiblement identique à celui précédemment décrit. Dans ce mode de réalisation, les ampoules 20 ne sont plus supportées par une plaque porte-ampoules mais sont individuellement montées sur des douilles 11 qui s'encliquètent de manière étanche directement sur le cuvelage 7, c'est à dire directement sur le pare-chocs 3.

Le cuvelage 7 ayant pour fonction de supporter et contenir les ampoules 20, il constitue le boîtier d'optique.

Un vitrage coloré 8 s'applique, comme précédemment décrit, sur le cuvelage 7.

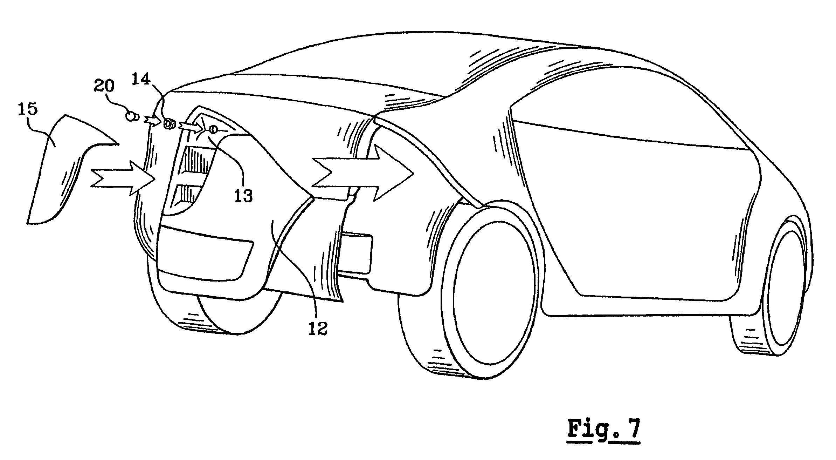

Dans le mode de réalisation de la figure 7, la pièce de carrosserie selon l'invention se limite à un coin de pare-chocs 12.

Ce coin de pare-chocs intègre le cuvelage 13 d'une optique sur laquelle les ampoules se montent par l'intermédiaire de douilles 14 encliquetées par l'extérieur du véhicule. Comme précédemment, le cuvelage 13 est aussi le boîtier de l'optique.

Ce mode de réalisation est plus particulièrement approprié pour les sources lumineuses dont la durée de vie est supérieure à celle du véhicule, par exemple les diodes électroluminescentes.

Dans ce cas, le vitrage 15, éventuellement coloré, peut être assemblé sur le coin de pare-chocs de manière définitive et indémontable.

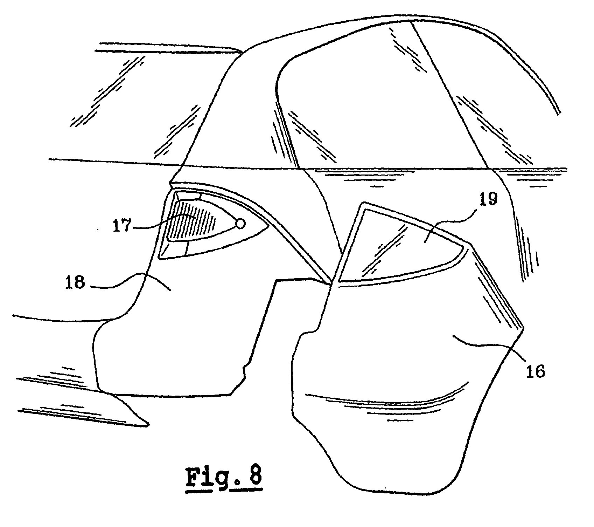

Dans le mode de réalisation de la figure 8, la pièce de carrosserie 16 est également un coin de pare-chocs.

Le cuvelage 17 de l'optique est intégré à la structure arrière 18 du véhicule, tandis que le vitrage coloré 19 fait partie intégrante du coin de pare-chocs 16.

La réalisation d'un tel coin de pare-chocs peut se faire par surmoulage ou par co-injection.

Les déformations du coin de pare-chocs sont, dans cet exemple, d'autant plus facilement tolérées par le vitrage que les contraintes qu'il subit du fait des déformations lui sont transmises de manière continue par le reste du pare-chocs, et non en des points de liaisons isolés qui concentreraient ces contraintes.

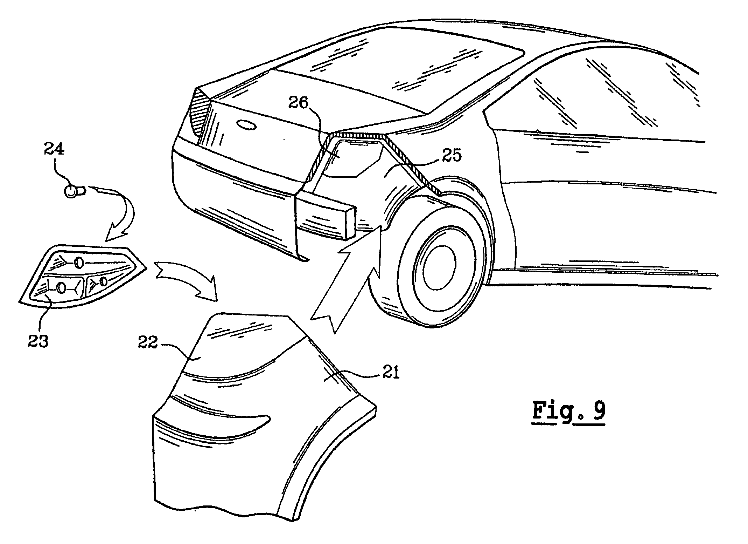

Dans le mode de réalisation de la figure 9, un coin de pare-chocs 21 intègre, dans sa partie supérieure, un vitrage 22 en matériau translucide surmoulé avec le reste du coin de pare-chocs.

Un boîtier formant un triple cuvelage 23, apte à recevoir trois ampoules 24, est conformé pour être rapporté à l'intérieur du coin de pare-chocs 21, derrière le vitrage 22.

Un moyen de fixation du cuvelage 23 dans le coin de pare-chocs 21 peut consister en un encliquetage, un collage ou un soudage ou tout autre moyen approprié.

Sur le véhicule, la structure 25 recouverte par le coin de pare-chocs 21 comporte une trappe 26 qui permet l'accès aux ampoules 24 lorsque le coin de pare-chocs est monté sur le véhicule.

Ainsi, le remplacement des ampoules 24 peut être effectué sans démonter ni la pièce de carrosserie ni les éléments constitutifs de l'optique. Bien entendu, une telle trappe serait inutile avec des sources lumineuses à très longue durée de vie comme des diodes électroluminescentes.

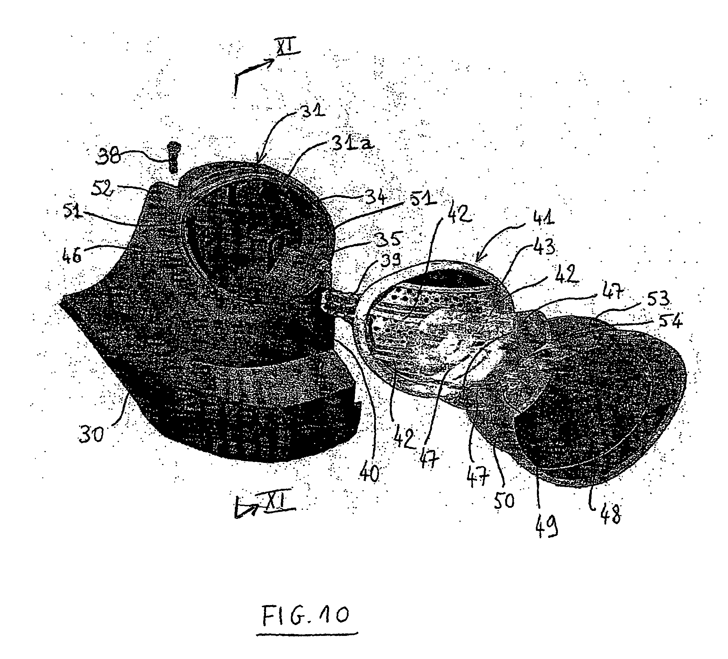

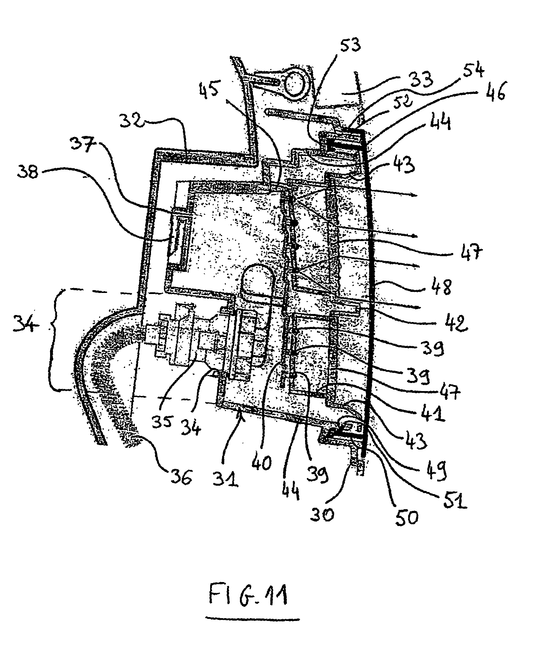

Dans le mode de réalisation des figures 10 et 11, la pièce de carrosserie 30 est encore un coin de pare-chocs. La peau externe de ce coin de pare-chocs est conformée à sa partie inférieure de manière à prolonger la partie centrale (non représentée) du pare-chocs et à sa partie supérieure en un boîtier d'optique 31 qui vient se loger dans un dégagement d'une pièce de structure 32 à l'arrière du véhicule, sous un ouvrant 33 et dans le prolongement de ce dernier.

Le fond 31a du boîtier 31 comporte, à sa partie inférieure, un renfoncement 34 dans lequel est ménagée une ouverture pour recevoir un connecteur électrique 35 reliant les sources lumineuses de l'optique à un câble électrique d'alimentation 36. Un joint assure l'étanchéité entre le connecteur et le boîtier.

Un évent 37 est formé dans la partie supérieure du fond 31a pour mettre l'intérieur du boîtier en communication avec l'extérieur. Contrairement aux boîtiers des modes de réalisation précédents, dans lesquels au moins les supports d'ampoules, non étanches, laissaient un passage avec l'extérieur, le boîtier 31 est hermétiquement fermé, comme cela résulte de la description qui suit, de sorte que l'évent 37 est indispensable pour maintenir l'intérieur du boîtier aux mêmes conditions hygrométriques et à la même pression que l'extérieur, afin de prévenir la formation de buée sur la face interne du vitrage d'optique et éviter les surpressions qui pourraient résulter d'un échauffement de l'air qu'il contient, en raison de l'allumage des sources lumineuses ou tout simplement d'un ensoleillement.

Une tubulure 38 dirigée vers le bas vient coiffer l'embouchure externe de l'évent pour empêcher l'introduction d'eau ou d'autres liquides ruisselant sur de la pièce de structure 32.

Les sources lumineuses sont des diodes électroluminescentes 39 assemblées en un chapelet 40 qui sert à la fois à les alimenter électriquement et à les prédisposer selon un réseau, ce qui facilite leur montage.

Dans ce mode de réalisation, les diodes 39 sont portées par un masque 41 percé de trous dont chacun est prévu pour l'introduction par l'arrière du masque de la partie émettrice d'une diode 39 du chapelet. En outre, le masque est conformé de manière à créer des séparations 42 (dont une seule est visible dans le plan de coupe de la figure 11) servant par exemple à diviser les diodes en trois groupes émettant des lumières de couleurs différentes.

Le masque est conformé en cuvette, avec un bord périphérique 43 couvrant la face intérieure de la paroi latérale 44 du boîtier jusqu'à son bord frontal 46, de sorte que le masque semble constituer l'intérieur du boîtier lorsqu'on regarde l'optique depuis l'extérieur du véhicule.

La fixation du masque 41 dans le boîtier est assurée par encliquetage sur une patte 45 en saillie du fond du boîtier, tandis que le bord périphérique 43 du masque s'appuie sur le bord frontal 46 de la paroi latérale du boîtier.

Un diffuseur optique 47 en trois parties vient se loger dans le masque, devant les diodes 39 et entre les séparations 42 du masque. Ce diffuseur forme un faisceau lumineux unidirectionnel à partir des émissions divergentes des diodes, comme le schématisent les flèches représentées sur la figure 11.

Enfin, devant le diffuseur optique 47, le boîtier supporte un vitrage 48 qui est rapporté sur le boîtier et encliqueté sur son bord frontal 46, au moyen de pattes 49 en saillie d'une jupe annulaire 50 solidaire du boîtier et d'orifices d'encliquetage 51 ménages dans des pattes d'encliquetage découpées dans le bord 46.

Au voisinage du bord 46, la paroi 44 est doublée d'un rebord 52 qui forme avec ladite paroi une gorge de réception de la jupe 50 du vitrage, gorge dont le fond est garni d'un joint 53 contre lequel s'appuie la jupe, assurant ainsi l'étanchéité du boîtier dans sa partie frontale.

La jupe comporte en outre, à sa partie supérieure, un rebord 54 dont la fonction est purement esthétique.

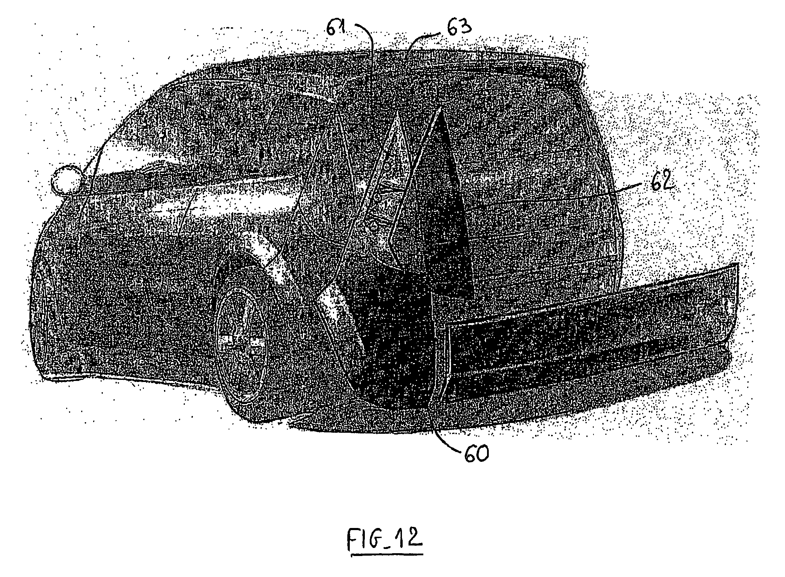

Dans le mode de réalisation de la figure 12, on retrouve un coin de pare-chocs 60 comportant un aménagement 61 formant un boîtier d'optique. Un vitrage 62 est rapporté sur cet aménagement, comme dans le mode de réalisation de la figure 7.

Ce mode de réalisation est intéressant en ce que la pièce de carrosserie 60 se prolonge vers le haut jusqu'au pavillon 63 du véhicule, ce qui permet de loger l'aménagement formant boîtier, donc l'optique, en partie supérieure du véhicule. Il en résulte une meilleure visibilité des signalisations lumineuses et une préservation de l'optique en cas de chocs à faible énergie.

Dans chacun des modes de réalisation de l'invention, on peut noter que les dilatations différentielles entre éléments constitutifs de l'optique et entre l'optique et la pièce de carrosserie qui l'entoure sont minimes, ce qui permet de ne laisser qu'un très faible jeu de dilatation autour des pièces et améliore l'esthétique de l'ensemble.

Bien entendu, les modes de réalisation précédemment décrits peuvent se combiner dans un même dispositif selon l'invention, dans lequel tant le boîtier que le vitrage seraient réalisés par la peau externe de la pièce de carrosserie.

D'autres modifications des exemples décrits ci-dessus sont par ailleurs possibles, sans pour cela sortir du cadre de l'invention.

## Revendications

1. Combinaison d'une pièce de carrosserie (3, 12, 16, 21, 30, 60) et d'un dispositif optique (6, 7, 8, 13, 15, 17, 19, 22, 23, 31, 48, 61, 62) d'un véhicule automobile, la pièce de carrosserie étant destinée à enrober une partie (9, 18, 25) de la ceinture de caisse du véhicule et comportant une peau externe (3) formée par une paroi en matière plastique, le dispositif optique ayant pour éléments constitutifs un boîtier (7, 13, 17, 23, 31, 61) apte à contenir au moins une source lumineuse et un vitrage (8, 15, 19, 22, 48, 62) permettant la diffusion de lumière émise par ladite source lumineuse, **caractérisée en ce que** la peau externe de la pièce de carrosserie comporte un aménagement (7, 13, 19, 31, 61) formant au moins une partie de l'un au moins des éléments constitutifs du dispositif optique.

2. Combinaison selon la revendication 1, **caractérisée en ce que** l'élément constitutif du dispositif optique formé par la peau externe est son boîtier (7, 13, 31, 61).

3. Combinaison selon l'une quelconque des revendications 1 et 2, **caractérisée en ce que** le vitrage (8, 15, 48, 62) est rapporté sur le boîtier et fixé sur celui-ci.

4. Combinaison selon la revendication 3, **caractérisée en ce que** le vitrage (48) est encliqueté sur le boîtier, un joint (53) assurant l'étanchéité entre ledit vitrage et ledit boîtier.

5. Combinaison selon la revendication 4, **caractérisée en ce que** le vitrage (48) comporte une jupe annulaire (50), tandis que le boîtier comporte une gorge périphérique (44, 52) dont le fond est garni par le joint et dans laquelle vient se loger la jupe annulaire du vitrage.

6. Combinaison selon l'une quelconque des revendications 4 et 5, **caractérisée en ce que** le boîtier comporte un évent (37) assurant la ventilation de son volume intérieur.

7. Combinaison selon l'une quelconque des revendications 3 à 5, **caractérisée en ce que** la source lumineuse est un ensemble (40) de diodes électroluminescentes (39).

8. Combinaison selon la revendication 2, **caractérisée en ce que** le boîtier est partiellement réalisé par la peau externe de la pièce de carrosserie (3).

9. Combinaison selon la revendication 1, **caractérisée en ce que** l'élément constitutif du dispositif optique formé par la peau externe est le vitrage (19).

## Patentansprüche

1. Kombination eines Karosserieteils (3, 12, 16, 21, 30, 60) und einer optischen Vorrichtung (6, 7, 8, 13, 15, 17, 19, 22, 23, 31, 48, 61, 62) eines Kraftfahrzeugs, wobei der Karosserieteil dazu bestimmt ist, einen Teil (9, 18, 25) der Fahrzeugaufbauumschließung zu überziehen und ein Außenblech (3) umfasst, das von einer Wand aus Kunststoff gebildet wird, wobei die optische Vorrichtung als Bestandteile ein Gehäuse (7, 13, 17, 23, 31, 61) hat, das mindestens eine Lichtquelle und eine Verglasung (8, 15, 19, 22, 48, 62) aufnehmen kann, die das Verteilen des von der Lichtquelle gesendeten Lichts erlaubt, **dadurch gekennzeichnet, dass** das Außenblech des Karosserieteils eine Einrichtung (7, 13, 19, 31, 61) umfasst, die mindestens einen Teil mindestens eines der Bestandteile der optischen Vorrichtung bildet.

2. Kombination nach Anspruch 1, **dadurch gekennzeichnet, dass** der Bestandteil der optischen Vorrichtung, der aus dem Außenblech gebildet ist, sein Gehäuse (7, 13, 31, 61) ist.

3. Kombination nach einem der Ansprüche 1 und 2, **dadurch gekennzeichnet, dass** die Verglasung (8, 15, 48, 62) auf das Gehäuse angebaut und an diesem befestigt ist.

4. Kombination nach Anspruch 3, **dadurch gekennzeichnet, dass** die Verglasung (48) auf dem Gehäuse eingerastet ist, wobei eine Dichtung (53) die Abdichtung zwischen der Verglasung und dem Gehäuse sicherstellt.

5. Kombination nach Anspruch 4, **dadurch gekennzeichnet, dass** die Verglasung (48) eine ringförmige Schürze (50) umfasst, während das Gehäuse eine periphere Hohlkehle (44, 52) umfasst, deren Boden mit der Dichtung versehen ist und in die sich die ringförmige Schürze der Verglasung fügt.

6. Kombination nach einem der Ansprüche 4 und 5, **dadurch gekennzeichnet, dass** das Gehäuse eine Entlüftung (37) umfasst, die die Belüftung seines Innenvolumens sicherstellt.

7. Kombination nach einem der Ansprüche 3 bis 5, **dadurch gekennzeichnet, dass** die Lichtquelle eine Einheit (40) von lichtemittierenden Dioden (39) ist.

8. Kombination nach Anspruch 2, **dadurch gekennzeichnet, dass** das Gehäuse teilweise aus dem Außenblech des Karosserieteils (3) hergestellt ist.

9. Kombination nach Anspruch 1, **dadurch gekennzeichnet, dass** der Bestandteil der optischen Vorrichtung, der von dem Außenblech gebildet wird, die Verglasung (19) ist.

## Claims

1. A combination of a piece of bodywork (3, 12, 16, 21, 30, 60) and a light unit (6, 7, 8, 13, 15, 17, 19, 22, 23, 31, 48, 61, 62) for a motor vehicle, the piece of bodywork being to cover a portion (9, 18, 25) of the waistline of the vehicle body and comprising an outside skin (3) formed by a wall of plastics material, the light unit having as component elements both a housing (7, 13, 17, 23, 31, 61) suitable for containing at least one light source and a glass (8, 15, 19, 22, 48, 62) enabling light emitted by said light source to be diffused, **characterized in that** the outside skin of the piece of bodywork includes an arrangement (7, 13, 19, 31, 61) forming at least a portion of at least one of the component elements of the light unit.

2. A combination according to claim 1, **characterized in that** the component element of the light unit formed by the outside skin is the housing (7, 13, 31, 61) thereof.

3. A combination according to any one of claims 1 and 2, **characterized in that** the glass (8, 15, 48, 62) is applied to the housing and is fixed thereto.

4. A combination according to claim 3, **characterized in that** the glass (48) is snap-fastened to the housing, a gasket (53) providing sealing between said glass and said housing.

5. A combination according to claim 4, **characterized in that** the glass (48) includes an annular skirt (50) and the housing includes a peripheral groove (44, 52) whose bottom is lined by a gasket and in which the annular skirt of the glass is received.

6. A combination according to any one of claims 4 and 5, **characterized in that** the housing includes a vent (37) for ventilating its inside volume.

7. A combination according to any one of claims 3 to 5, **characterized in that** the light source comprises a set (40) of light-emitting diodes 39.

8. A combination according to claim 2, **characterized in that** the housing is made in part by the outside skin of the piece of bodywork (3).

9. A combination according to claim 1, **characterized in that** the component element of the light unit formed by the outside skin is the glass (19).
